# EUROPEAN PATENT SPECIFICATION

(11) **EP 2 845 810 B1**
(45) Date of publication and mention of the grant of the patent: **22.02.2017**
(21) Application number: 13730953.0
(22) Date of filing: 24.04.2013
(51) Int. Cl.: B65B 29/02, B65B 59/00, B65B 1/30, B65B 7/28

(54) **METHOD FOR DISPENSING EDIBLE SUBSTANCES FOR THE PREPARATION OF BEVERAGES, SYSTEM FOR IMPLEMENTING THIS METHOD AND USES THEREOF**
VERFAHREN ZUR AUSGABE VON ESSBAREN SUBSTANZEN ZUR ZUBEREITUNG VON GETRÄNKEN, SYSTEM ZUR DURCHFÜHRUNG DIESES VERFAHRENS UND VERWENDUNGEN DAVON
PROCÉDÉ DE DISTRIBUTION DE SUBSTANCES COMESTIBLES POUR LA PRÉPARATION DE BOISSONS, SYSTÈME POUR LA RÉALISATION DE CE PROCÉDÉ ET UTILISATIONS DE CELUI-CI

(30) Priority: 26.04.2012 PT 2012106271
(43) Date of publication of application: 11.03.2015
(73) Proprietor: Novadelta-Comércio e Industria de Cafés, S.A., 1950-406 Lisboa (PT)
(72) Inventor: NABEIRO, Rui Miguel, P-7370-112 Campo Maior (PT)
(74) Representative: Miranda de Sousa, João Paulo Vaz
(86) International application number: PCT/PT2013/000022
(87) International publication number: WO 2013/162392

(56) References cited:
- EP-A1- 2 230 195
- EP-A2- 1 068 826
- WO-A1-2010/076048
- WO-A1-2011/039711
- AU-B2- 649 844
- DE-A1-102010 027 522

## Description

### Field of the invention

The present invention refers to a process for distributing edible substances, in particular aromatic substances, for preparation of beverages by means of percolation, in particular by means of portion packages of the capsule type including a respective individual dose and configured for use in a respective extraction device..

The present invention further refers to a system for distribution of edible substances for carrying out the process according to the invention, as well as to uses thereof.

### Background of the invention

The distribution of aromatic substances for the production of beverages by percolation, such as for example espresso type coffee or tea, by means of systems of recipients of individual doses, such as for example of the capsules or pods types, has been gaining increasing relevance, amongst other facts due to the constant beverage quality and to the easy of use provided by such systems of portion packages relative to packages with a bigger and indiscriminate quantity of doses. In line with this trend, in particular in the case of espresso type coffee, there has also been an increasing interest in providing consumers with more options in terms of the varieties of coffee grains, including different blends thereof, and in terms of processing parameters thereof, including roasting and grinding degree of the coffee grains, and in making such options available in packages of individual portions.

There are several solutions in the prior art relating to processes and systems for distribution of beverages including the possibility of processing and mixing of different aromatic substances directly at location (e.g., US 5,718,163, WO 2006/058713 A1, WO 2010/099806 A1) and according to the options of a user (e.g., CA 2568246, US 2003/0079612 A1).

A particular problem is related with carrying out a process of this type including the filling and assembling of closed packages of individual portions, whereby different solutions about this are known (e.g., US 5,361,560, US 6, 321, 506, US 2003/0057234 A1, EP 2048633 A2).

In the case of packages of the type of capsules of substantially rigid material, a substantially oxygen tight closing assembly is usually carried out by means of joining two respective construction elements which usually presents high energy and scape requirements, in this case involving processes and systems generating noise and residues that make its use difficult in non industrial locations, such as in a shopping centre or in a household.

Document DE 10 2010 027522 A1 discloses a capsule thereby making a reference to an attachment of a respective container and lid part without temperature variation of the construction material, in particular by means of gluing.

Document AU 649 844 B2 refers to a system of the same type as the one disclosed in the present invention, wherein the general flow of material and the application of at least one capsule closing force develops substantially along the direction of the gravity force.

Document EP 2230195 A1 suggests press-fitting a lid to a cup-shaped body of a coffee capsule.

Document WO 2011/039711 A1 discloses an industrial process for filling and closing a plurality of single portions in each cycle of process.

Document EP 1068826 A2 suggests a system wherein different kinds of grained coffee are metered, mixed and dispensed to a single container in each cycle of process.

Another problem relates to the configuration of the system so that the latter occupies the least possible area and makes it possible for a plurality of users to use it simultaneously.

The prior art does not include a solution for the above-identified problems.

### General description of the invention

The goal of the present invention is to provide a process for distribution of mixtures of aromatic substances in the form of portion packages closed in oxygen tight manner, with much less energy and space requirements, as well as with more simplicity of the means used. This goal is attained by means of a process whereby the closing assembly of the main construction elements of the portion packages is carried out without occurrence of a local temperature variation of the construction material, rather including by the application of at least one force, preferentially along the direction of the force of gravity.

According to a preferred aspect, the closing assembly is carried out by means of a compression force applied upon the superior construction element when the latter is disposed upon a respective inferior construction element, simultaneously in a plurality of portion packages. According to a particular aspect, the closing assembly is carried out by application of mechanical engagement means or of chemical adhesion between said construction elements.

An associated goal is to provide a process for distribution of portion packages presenting minimal requirements in terms of space and that allows processing multiple user requests simultaneously. This goal is attained according to a first inventive aspect by means of a process that unfolds substantially along the direction of the force of gravity.

According to another inventive aspect, each cycle of process is carried out based upon at least one operation parameter received from at least one operation interface, thus being possible to carry out the requests of more than one user in a same cycle of process that way optimizing its efficiency.

Another goal of the present invention is to provide a system for carrying out the process according to the present invention.

According to an inventive aspect, the storage means, the processing means, the dosing means and the closing assembly means are disposed in this sequence from top to bottom, so that the general flow of material and the application of the at least one closing force develops substantially along the direction of the force of gravity, preferentially along the vertical alignment of each portion package.

Another associated goal is to propose advantageous uses of the system according to the invention. In particular, a system according to the invention is used in a space with non-industrial characteristics, including spaces of commercial or household characteristics.

In this sense, the present invention further includes the use of aromatic edible substances for preparation of beverages by extraction, including coffee of espresso type, tea and similar, and respective distribution by means of packages containing individual portions, such as for example capsules of pads of coffee for the preparation of espresso type coffee, configured so as to be used in respective beverage preparation machines, notably by means of extraction by pressurized water.

### Description of the figures

The invention shall now be explained in more detailed based upon preferred embodiments and the Figures attached.

The Figures show, in simplified schematic representations:
- Figures 1a - 1b:: means of system for carrying out the process according to the invention (on the left-side) and respective steps of process (on the right-side);
- Figures 2a - 2b:: preferred embodiments of the step of assembling in a process according to the invention;
- Figures 3a - 3b:: functions associated with the processing of the mixture of aromatic substances in a process according to the invention;
- Figures 4a - 4b:: two moments of the step assembling of packages in a process according to the invention;
- Figures 5a - 5b:: plant views of preferred dispositions of the system according to the invention in a non industrial space;
- Figures 6a - 6b:: preferred forms of use of the system according to the invention.

### Detailed description of the invention

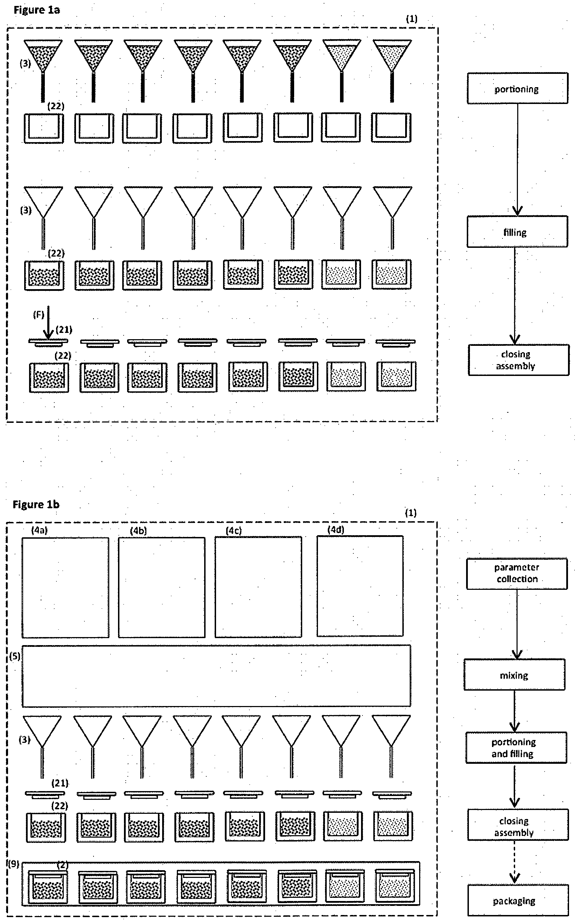

Figure 1a schematically represents the main steps of a process according to the invention, including the dosing of a certain aromatic substance, or mixture of aromatic substances, by means of at least one, preferentially several portioning means (3), preferentially disposed in alignment with one in each case respective inferior construction element (22) of a portion package (2), and respective filling. The closing assembly of the inferior construction elements (22) with the respective superior construction elements (21) of the portion package (2) takes place in a following step. According to the present invention, this closing assembly unfolds without resource to thermal sealing processes between said two construction elements (21, 22) of the portion package, so that a respective system (1) for distribution of mixtures of aromatic substances in closed packages does not require the use of machines and processes of industrial type, therefore presenting less energy requirements and being feasible in public commercial spaces or private domestic spaces or others.

According to a preferred embodiment of the process, the portioning means (3) are integrated and/or combined with the closing assembly means, so that the filling and closing assembly of the construction elements (21, 22) of the portion package take place without these being moved.

Figure 1b schematically represents an overall view of the process and respective main realization means according to the present invention. Thus, besides of the portioning, filling and substantially isothermal closing assembly of the portion packages, it is considered the initial storage of a plurality of different aromatic substances in respective storage means (4ₐ, ...) which are in material connection with respective means (5) of mixture (to be detailed further below). These means (5) of mixture supply in each operation cycle, mixture proportions (Aᵢ) to the portioning means (3).

Besides of these there may further be advantageously provided means for placing indications (8ᵢ) in the portion packages (2), as well as for providing these in respective transport and/or use packages (9).

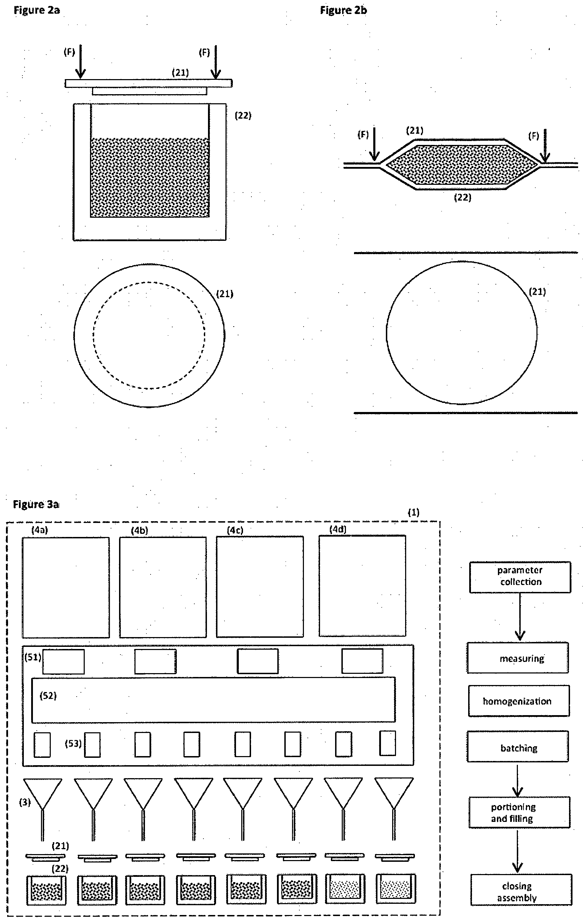

Figures 2a and 2b are schematic representations, in side cut, of in each case one different type of portion package, with identification of the type of closing assembly being carried out in a process according to the present invention.

Figure 2a thus represents a portion package (2) of the capsule type, produced from a substantially rigid and substantially airtight construction material, such as for example a metallic material or a synthetic material. In this type of portion packages, the closing assembly of a superior construction element (21) configured in form of lid, with an inferior construction element (22) configured in form of a container, is usually carried out with resource to welding processes or similar. However this type of processes presents high energy consumption needs, in particular in terms of installed capacity, as well as space required for the installation of a respective equipment, and is therefore difficult to provide in non-industrial areas. In the case of a preferred embodiment according to the present invention, it is proposed that this closing assembly is carried out by means of applying a force (F), preferentially applied upon at least one substantially central point, or upon two substantially symmetrical points of a respective edge zone.

In Figure 2b it is schematically represented a portion package of the pad type, produced from a material permeable to air. Likewise in this case, the closing assembly of the two construction elements (21, 22) of the portion package is carried out without temperature variation of the construction material, including by means of the application of a force symmetrically distributed along the edge zone thereof, by means of the application of mechanical engagement means or of chemical adhesion means between said superior and inferior construction elements (21, 22).

Figure 3a represents, also schematically, preferred embodiments of the mixing means (5) included in a system (1) according to the present invention. Thus, according to a preferred embodiment, said mixing means (5) include and/or are combined with measuring means (51) that carry out a measurement of quantities of each type of aromatic substance to be supplied by a respective storage means (4ₐ, ...), in view of the production of a certain total quantity of a given proportion of mixture (Aᵢ). According to another preferred embodiment, downstream from these measuring means (51) along the direction of the flow of material in the system (1), there are provided mixture homogenization means (52) and, downstream thereof, there are provided portioning means (53) that in each process cycle distribute the quantity, preferentially total quantity, of at least a given proportion of mixture (Aᵢ) produced in said cycle by the respective portioning means (3ₐ, ...) according to the number of portion packages com (2) requested for said proportion of mixture (Aᵢ).

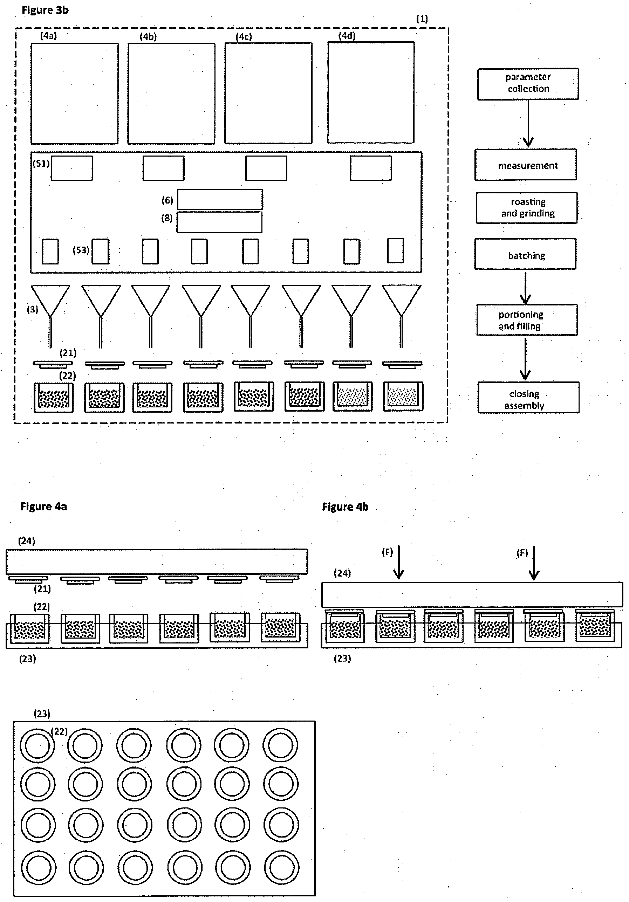

Figure 3b schematically represents another embodiment of a system (1) according to the invention, notably one in which there are further provided the functions of at least partial roasting, of the aromatic substances supplied by the storage means (4ₐ, ...), and at least partial grinding of. said substances. To this effect, the respective roasting means (6) and grinding means (8) are preferentially provided integrated or combined with the mixing process means (5). In a preferred embodiment of the invention, besides of the proportion of mixture (Aᵢ) and number of portion packages (2) to be produced with such proportion, a user of the system (1) according to the invention may select an indicator of roasting and/or grinding degree, for example by means of an operation interface (7).

Figures 4a and 4b schematically represent preferred embodiments of the proceedings of filling of the portion packages (2) and respective closing assembly. In the case of Figure 4a, it is provided a packages support (23) in which there is disposed a plurality of portion packages (2), initially still in open condition, there is only the respective inferior construction element (22). This packages support (23) preferentially presents the format of a rectangular matrix with at least two rows of inferior construction elements (22). After conclusion of a respective filling, an assembly support (24) on top of the packages support (23), preferentially substantially aligned along respective vertical projections. In particular, the package and assembly supports (23, 24) are preferentially disposed in removable union between themselves.

Figure 4b schematically represents a following moment in which there is applied at least one force (F), preferentially at least upon each superior element construction element (21) of the portion packages (2), notably so as to carry out the assembly of said superior construction elements (21) with the respective inferior construction elements (22).

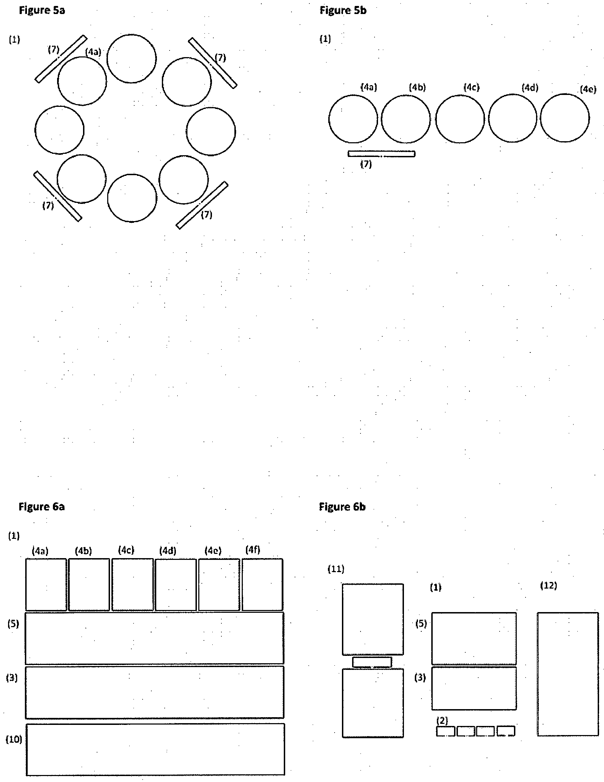

Figures 5a and 5b are schematic representations in plant view, of preferred uses according to the present invention. In particular, they illustrate the disposition of systems (1) in circle with a plurality of use interfaces (7) disposed around (Figure 5a), and along one linear direction with one use interface (7) for example disposed in one of the extremities (Figure 5b). These embodiments illustrate uses of the "island" and "shelf" types that may be provided for example in public and commercial spaces.

According to another preferred embodiment, illustrated in Figure 6a, the system (1) according to the invention is used in the proximity of a machine (10) for preparation of aromatic beverages, for example of professional type and for use in a commercial space. According to another particularly preferred embodiment, the system (1) in this case presents a plurality of storage means (4a, ...) of different types of aromatic substances and is connected, preferentially at least in actuation, with said machine (10).

In another preferred embodiment, schematically represented in Figure 6b, the system (1) is provided in the proximity of a roasting device (11) and/or grinding and/or portioning of aromatic substances. In this case, the system (1) only presents the mixing means (5) and the portioning means (3), whereby these are supplied with aromatic substances previously processed in said device (11). The portion packages (2) produced this way may then be used in a machine (12) for preparation of beverages configured correspondingly.

## Claims

1. Process for distribution of edible substances in portion packages (2) presenting at least one superior construction element (21) and one inferior construction element (22) together providing an interior volume for an individual portion and provided for use in respective machines for preparation of aromatic beverages by means of extraction by pressurized water, including coffee of espresso type, tea and similar, comprising the steps:
- supplying a plurality of empty inferior construction elements (22),
- mixing of at least two types (a, b) of aromatic substances from in each case respective storage means (4ₐ, 4_{b}), in a previously defined mixture proportion (A),
- portioning a plurality of portions
- filling of each portion package (2) with a respective portion by means of at least one feeding (3) means,
- closing a plurality of portion packages (2), by assembling one superior construction element (21) upon one in each case respective inferior construction element (22) without temperature variation of the construction material of the portion package (2), preferentially in a substantially oxygen tight manner, including preferentially only by means of applying at least one force upon at least one construction element (21, 22)
- said process including successive cycles carried out in function of at least one parameter received by a control device from at least one operation interface (7),
- said process unfolding substantially along the direction of the force of gravity, and
**characterized**
**in that** it is carried out a simultaneous closure of a plurality of portion packages (2), whereby at least two portion packages (2) included in a closing step, present in each case different mixture proportions (A₁, A₂), and in that each cycle includes the step of collecting at least one actuation parameter from a plurality of operation interfaces (7), including at least one mixture proportion (Aᵢ) and the number of individual doses to be produced with said mixture proportion (Aᵢ).

2. Process according to claim 1, **characterized**
**in that** the closing is carried out by means of applying at least one compression force, preferentially along a substantially vertical direction, upon at least one zone of said superior construction element (21), preferentially configured in a lid form, when disposed upon said inferior construction element (22), preferentially applied in a substantially symmetrical manner relative to the configuration of the portion package (2).

3. Process according to claim 1 or 2, **characterized**
**in that** said compression force is previously defined in function of parameters including the type, construction material and dimensions of the portion package (2), preferentially also the type of engagement between the construction elements (21, 22).

4. Process according to any one of claims 1 to 3, **characterized in that** the closure includes the application of mechanic engagement means or of adhesion means between said construction elements (21, 22).

5. Process according to any one of claims 1 to 4, **characterized in that** it further includes the steps of:
- roasting of the at least one edible substance supplied by the storage means (4ₐ, ...),
- grinding of the at least one edible substance supplied by the storage means (4ₐ, ...),
- portioning of the portions in respective portion packages (2) by means of the portioning means (3).

6. Process according to any one of the previous claims, **characterized in that** it further includes the steps of:
- applying at least one identification means in the portion packages (2), preferentially with representative and/or descriptive information of respective mixture proportion (Aᵢ), and/ or
- providing of at least one portion package (2) in a respective transport package (9).

7. System (1) for carrying out a process according to any one of the previous claims 1 to 9, comprising:
- a plurality of storage means (4ₐ, ...) of one in each case respective edible substance,
- processing means of at least one edible substance, preferentially of a mixture of edible substances, including grinding means (6) of edible substances preferentially disposed between the storage means (4ₐ, ...) and the mixture processing means (5), integrated or combined with the latter, and roasting means (8) for at least partial roasting of edible substances, provided integrated or combined with the mixture processing means (5),
- portioning means (3) of portions of the at least two types of edible substances, and supplying thereof to respective inferior construction element (22),
- closing assembly of the inferior construction elements (22) with respective superior construction elements (21) of a plurality of portion packages (2),
- whereby said storage means (4ₐ, ...), processing means, portioning means (3) and closure assembling means are disposed so that the general flow of material and the application of at least one closing force develops substantially along the direction of the force of gravity, preferentially along the vertical alignment of each portion package (2),
**characterized**
**in that** the storage means (4ₐ, ...) are disposed along at least part of a convex perimeter, including of circular, rectangular or similar form when seen in plant, and
**in that** the storage means (4ₐ, ...), the processing means and the portioning means (3) are in actuation connection between themselves and with a control device and with a plurality of operation interfaces (7), preferentially disposed along an exterior side such that a simultaneous closure of a plurality of portion packages is carried out wherein at least two portion packages (2)included in a closing step, present in each case different mixture proportions (A1,A2).

8. System according to claim 7, **characterized in that** the mixture processing means (5) include or are combined with measuring means (51), homogenization means (52) and distribution means (53), are disposed upstream of the dosing means (3) with relation to the general flow of material.

9. Use of a system (1) according to any one of claims 7 or 8, **characterized in that** the portion packages (2) are used in a machine (10) for preparation of beverages that is associated with them, including by mechanical and/or electro-mechanic means, and/or in a machine (12) for preparation of beverages connected with system (1) including by means of a remote communications connection.

## Patentansprüche

1. Verfahren zur Verteilung der essbaren Substanzen in Dosierungspakete (2), die mindestens ein höherwertiges Bauteilelement (21) und ein minderwertiges Bauteilelement (22) darstellen, in dem beide ein Innenvolumen für eine Einzeldosierung versorgen und versorgt sind zur Anwendung in entsprechende Maschinen zur Zubereitung von aromatischen Getränken durch Extraktion durch in Druck gesetztes Wasser, einschließlich espressoähnlichem Kaffee, Tee und Ähnliches, folgende Schritte beinhaltend:
- Lieferung einer Vielzahl von leeren minderwertigen Bauteilelementen (22),
- Mischung von mindestens zwei Arten (a, b) von aromatischen Substanzen aus in jedem Fall entsprechende Vorratsmittel (4ₐ, 4_{b}), in einem zuvor definierten Mischmengenanteil (A),
- Dosieren einer Vielzahl von Dosierungen
- Füllung von jedem Dosierungspaket (2) mit entsprechender Dosierung von mindestens einem Fütterungsmittel (3),
- Verschließen einer Vielzahl von Dosierungspaketen (2), in dem ein höherwertiges Bauteilelement (21) auf einem jedem Fall entsprechenden minderwertigen Bauteilelement (22) ohne Temperaturwechsel des Baumateriales des Dosierungspakets (2) zusammengesetzt, vorzugsweise in einer wesentlich sauerstoffengen Weise, einschließlich vorzugsweise nur durch Anwendung mindestens einer Kraft auf mindestens einem Bauteilelement (21, 22)
- genanntes Verfahren einschließlich aufeinanderfolgende Zyklen durchgeführt in Funktion von mindestens einem Parameter, der durch ein Kontrollgerät von mindestens einer Operationsverbindung (7) erhalten wurde,
- genanntes Verfahren entfaltet sich wesentlich entlang der Richtung der Schwerkraft, und
**gekennzeichnet**
**dadurch, dass** eine zeitgleiche Schließung von einer Vielzahl von Dosierungspaketen (2) durchgeführt wird, wobei mindestens zwei Dosierungspakete (2), eingeschlossen in einem Schließungsschritt, in jedem Fall verschiedene Mischdosierungen (A₁, A₂) darstellen, und dadurch, dass jeder Zyklus den Sammelschritt von mindestens einem Betätigungsparameter von einer Vielzahl von Operationsverbindungen (7) einschließt, einschließlich mindestens eine Mischdosierung (A1) und die Anzahl von Einzeldosierungen, die mit genannter Mischdosierung (A₁) hergestellt werden.

2. Verfahren gemäß Anspruch 1 **gekennzeichnet**
**dadurch, dass** die Schließung durch Anwendung von mindestens einer Druckkraft durchgeführt wird, vorzugsweise entlang einer wesentlich senkrechten Richtung, auf mindestens einer Zone von genanntem höherwertigen Bauteilelement (21), vorzugsweise gestaltet in einer Deckelform, wenn auf genanntem minderwertigen Bauteilelement (22) versorgt, vorzugsweise angewendet in einer wesentlich symmetrischen Weise bzgl. der Konfiguration des Dosierungspakets (2).

3. Verfahren gemäß Anspruch 1 oder 2 **gekennzeichnet**
**dadurch, dass** genannte Druckkraft vorher in Funktion von Parametern einschließlich die Art, das Baumaterial und die Dimensionen des Dosierungspakets (2) definiert wird, vorzugsweise auch die Kupplungsart zwischen den Bauteilelementen (21, 22).

4. Verfahren gemäß einer der Ansprüche 1 bis 3 **gekennzeichnet dadurch, dass** die Schließung die Anwendung mittels mechanischer Kupplung oder Haftung zwischen genannte Bauteilelemente (21, 22).

5. Verfahren gemäß einer der Ansprüche 1 bis 4 **gekennzeichnet dadurch, dass** weiterhin folgende Schritte beinhalten:
- Röstung von mindestens einer essbaren Substanz geliefert mittels Anlagerung (4ₐ, ...),
- Zermahlen von mindestens einer essbaren Substanz geliefert mittels Lagerung (4ₐ, ...),
- Dosierung von Dosierungen in entsprechenden Dosierungspaketen (2) durch Dosierungsmittel (3).

6. Verfahren gemäß einer der vorigen Ansprüche **gekennzeichnet dadurch, dass** weiterhin folgende Schritte beinhalten:
- Anwendung von mindestens eines Kennzeichnungsmittels in den Dosierungspaketen (2), vorzugsweise mit darstellender und/oder erklärenden Information von entsprechenden Mischdosierungen (A₁), und/oder
- Versorgung von mindestens einem Dosierungspaket (2) in einem entsprechenden Transportpaket (9).

7. System (1) zur Durchführung eines Verfahrens gemäß einer der vorigen Ansprüche 1 bis 9 beinhaltet:
- eine Vielzahl von Lagerungsmitteln (4ₐ, ...) von in jedem Fall einer entsprechenden essbaren Substanz,
- Abwicklungsmittel von mindestens einer essbaren Substanz, vorzugsweise einer Mischung von essbaren Substanzen, einschließlich Mahlensmittel (6) von essbaren Substanzen vorzugsweise zwischen Lagerungsmitteln (4ₐ,...) und Mischabwicklungsmitteln (5) zurecht gelegt, eingeordnet oder kombiniert mit dem letzten, und Röstungsmittel (8) für mindestens Teilröstung von essbaren Substanzen, eingeordnet oder kombiniert mit den Mischabwicklungsmitteln (5) versorgt,
- Dosierungsmittel (3) von Dosierungen von mindestens zwei essbaren Substanzarten,
und somit Lieferung
an entsprechende minderwertige Bauteilelemente (22),
- Schließungsanordnung von den minderwertigen Bauteilelementen (22) mit entsprechenden höherwertigen Bauteilelementen (21) von einer Vielzahl von Dosierungspaketen (2),
- wobei genannte Anlagerungen (4ₐ,...), Abwicklungsmittel, Dosierungsmittel (3) und Schließungsanordnungen so angeordnet sind, dass sich der allgemeine Fluss von Material und der Anwendung von mindestens einer Schließungskraft wesentlich entlang der Richtung der Gravitätskraft entwickelt, vorzugsweise entlang der senkrechten Angleichung von jedem Dosierungspaket (2),
**gekennzeichnet**
**dadurch, dass** die Anlagerungen (4ₐ, ...) mindestens entlang teils eines konvexen Umfangs angeordnet sind, einschließlich von Kreis-, Rechteck- oder ähnlicher Form, wenn in Anlage gesehen, und
dadurch, dass die Anlagerungen (4ₐ,...), die Abwicklungsmittel und die Dosierungsmittel (3) in Betätigungsverbindung zwischen denen selbst sind und mit einem Kontrollgerät und mit einer Vielzahl von Operationsverbindungen (7), vorzugsweise angeordnet entlang einer Außenseite und so, dass eine zeitgleiche Schließung von einer Vielzahl von Dosierungspaketen durchgeführt wird, worin mindestens zwei Dosierungspakete (2) in einem Schließungsschritt beinhaltet in jedem Fall verschiedene Mischdosierungen (A₁, A₂) dargestellt sind.

8. System gemäß Anspruch 7 **gekennzeichnet dadurch, dass** die Mischabwicklungsmittel (5) einschließen oder kombiniert sind mit Messmittel (51), Homogenisierungsmittel (52) und Verteilungsmittel (53), stromaufwärts der Dosierungsmittel (3) in Bezug auf den allgemeinen Fluss von Material angeordnet sind.

9. Gebrauch eines Systems (1) gemäß einer der Ansprüche 7 oder 8 **gekennzeichnet dadurch, dass** die Dosierungspakete (2) in einer Maschine (10) zur Getränkezubereitung benutzt werden, die mit ihnen verbunden ist, einschließlich durch mechanische und/oder elektromechanische Mittel, und/oder eine Maschine (12) zur Getränkezubereitung verbunden mit System (1) einschließlich mittels einer fernen Kommunikationsverbindung.

## Revendications

1. Processus de distribution de substances comestibles dans des emballages-portion (2), présentant au moins un élément de structure supérieur (21) et un élément de structure inférieur (22), tous deux disposant d'un volume interne pour une portion individuelle et fourni pour l'usage dans les machines correspondantes pour la préparation de breuvages aromatiques à travers l'extraction par de l'eau pressurisée, y compris le café de type expresso, le thé et des boissons similaires, comprenant les étapes suivantes :
- l'approvisionnement d'une pluralité d'éléments vides de structure inférieure (22),
- le mélange d'au moins deux types (a, b) de substances aromatiques à partir des moyens de stockage respectifs (4ₐ, 4_{b}), dans chaque cas, selon une proportion de mélange définie au préalable (A),
- le conditionnement en une pluralité de portions
- le remplissage de chaque emballage-portion (2) avec la portion correspondante à travers au moins un moyen d'alimentation (3),
- la fermeture d'une pluralité d'emballages-portion (2), en assemblant un élément de structure supérieur (21), sur un élément de structure inférieur respectif (22) dans chaque cas, sans variation de température du matériau de structure de l'emballage-portion (2), de préférence d'une forme substantiellement étanche à l'oxygène, y compris de préférence en appliquant au moins une force sur au moins un élément de structure (21, 22)
- ledit processus comprenant des cycles successifs menés en fonction d'au moins un paramètre reçu par un dispositif de contrôle depuis au moins une interface d'opération (7),
- ledit processus se déployant substantiellement le long de la direction de la force de la gravité, et
**caractérisé**
**par le fait qu'**une fermeture simultanée d'une pluralité d'emballages-portion (2) est effectuée et où au moins deux emballages-portion (2) inclus dans une étape de clôture, présentent dans chaque cas, des proportions de mélange différentes (A₁, A₂) et **par le fait que** chaque cycle inclut l'étape du recueil d'au moins un paramètre d'actionnement depuis une pluralité d'interfaces opérationnelles (7), y compris au moins une proportion de mélange (Aᵢ) et le nombre de doses individuelles à produire avec ladite production de mélange (Aᵢ).

2. Processus selon la revendication 1, **caractérisé par le fait que** la fermeture est effectuée à travers l'application d'au moins une force de compression, de préférence le long de la direction substantiellement verticale, sur au moins une zone dudit élément de structure supérieur (21), de préférence configuré sous une forme de couvercle, lorsqu'il est disposé sur ledit élément de structure inférieur (22), de préférence appliqué d'une forme substantiellement symétrique relativement à la configuration de l'emballage-portion (2).

3. Processus selon une quelconque revendication entre 1 et 2, **caractérisé par le fait que** la force de compression est définie au préalable en fonction des paramètres, comprenant le type, le matériau de la structure et les dimensions de l'emballage-portion (2), de préférence également le type d'engagement entre les éléments de structure (21, 22).

4. Processus selon une quelconque revendication entre 1 et 3, **caractérisé par le fait que** la fermeture inclut l'application de moyens d'engagement mécanique ou de moyens d'adhésion entre lesdits éléments de structure (21, 22).

5. Processus selon une quelconque revendication entre 1 et 4, **caractérisé par le fait qu'**il inclut également les étapes suivantes :
- torréfaction d'au moins une substance comestible, fournie par les moyens de stockage (4ₐ, ...),
- concassage d'au moins une substance comestible, fournie par les moyens de stockage (4ₐ, ...),
- conditionnement en portions dans les emballages-portion (2) à travers des moyens de conditionnement en portions (3).

6. Processus selon une quelconque revendication antérieure, **caractérisée par** l'inclusion des étapes suivantes:
- application d'au moins un moyen d'identification dans les emballages-portion (2), de préférence avec une information descriptive et/ou représentative de la proportion du mélange correspondant (Aᵢ), et/ou
- fournir au moins un emballage-portion (2) dans l'emballage de transport correspondant (9).

7. Système (1) pour mener le processus selon une quelconque revendication antérieure entre 1 et 9, comprenant:
- une pluralité de moyens de stockage (4ₐ, ...) d'une substance comestible correspondante, dans chaque cas,
- les moyens de traitement d'au moins une substance comestible, de préférence un mélange de substances comestibles, incluant des moyens de concassage (6) de substances comestibles, de préférence disposées parmi les moyens de stockage (4ₐ, ...) et les moyens de traitement du mélange (5), intégrés ou combinés avec le second, et les moyens de torréfaction (8) pour au moins une torréfaction partielle de substances comestibles, fournies de forme intégrée ou combinée avec les moyens de traitement de mélange (5),
- les moyens de conditionnement (3) des portions d'au moins deux types de substances comestibles,
et menant ceux-ci vers leur élément de structure inférieure correspondante (22),
- assemblage de fermeture des éléments de structure inférieure (22) avec leurs éléments de structure supérieure correspondante (21) d'une pluralité d'emballages-portion (2),
- où lesdits moyens de stockage (4ₐ, ...), les moyens de traitement, les moyens de conditionnement en portion (3), les moyens d'assemblage de fermeture sont disposés afin que le fluxe général du matériau et de l'application d'au moins une force de fermeture se développent substantiellement le long de la direction de la force de gravité, de préférence le long de l'alignement vertical de chaque emballage-portion (2),
**caractérisé**
**par le fait que** les moyens de stockage (4ₐ,...) sont disposés le long d'au moins une partie du périmètre convexe, incluant une forme circulaire, rectangulaire ou similaire, lorsque vu dans l'équipement et
**par le fait que** les moyens de stockage (4ₐ,...), les moyens de traitement et les moyens de conditionnement en portions (3) sont en connexion d'actionnement entre eux-mêmes et avec un dispositif de contrôle ainsi qu'avec une pluralité d'interfaces opérationnelles (7), de préférence disposés le long d'un côté externe,
de telle forme qu'une fermeture simultanée d'une pluralité d'emballages-portion est effectuée parmi au moins deux emballages-portion (2), inclus dans l'étape de fermeture, présent dans des proportions de mélange différentes, dans chaque cas (A1, A2).

8. Système selon la revendication 7, **caractérisé par le fait que** les moyens de traitement de mélange (5) incluent ou sont combinés avec les moyens de mesure (51), les moyens d'homogénéisation (52) et les moyens de distribution (53); ils sont disposés en amont des moyens de dosage (3) relativement au le flux général du matériau.

9. Usage d'un système (1) selon une quelconque revendication entre 7 et 8, **caractérisé par le fait que** les emballages-portion (2) sont utilisés dans une machine (10) pour la préparation de breuvages qui leur sont associés, y compris par des moyens mécaniques et/ou électromécaniques et/ou dans une machine (12) pour la préparation de breuvages liés au système (1) y compris par des moyens de connexion de communications à distance.
